Europäisches Patentamt

(19) European Patent Office

Office européen des brevets

(11) Numéro de publication: **0 055 950**
A1

## (12) DEMANDE DE BREVET EUROPEEN

(21) Numéro de dépôt: **81401911.3**

(22) Date de dépôt: **02.12.81**

(51) Int. Cl.³: **F 24 D 13/02**

(30) Priorité: **15.12.80 FR 8026859**
**12.11.81 FR 8121163**

(43) Date de publication de la demande:
**14.07.82 Bulletin 82/28**

(84) Etats contractants désignés:
**AT BE CH DE GB IT LI LU NL SE**

(71) Demandeur: **Vasseur, Georges**
**16, route de Saussan**
**F-34570 Pignan(FR)**

(72) Inventeur: **Vasseur, Georges**
**16, route de Saussan**
**F-34570 Pignan(FR)**

(74) Mandataire: **Rodhain, Claude**
**Cabinet Rodhain-Genestie 30, rue La Boétie**
**F-75008 Paris(FR)**

(54) Plafonds chauffants par rayonnement sous forme modulaire et leur système modulaire de raccordement électrique.

(57) Panneaux modulaires constitués d'un élément chauffant alimenté en électricité interposé entre une plaque de revêtement extérieur assurant le transport des calories par conduction, et d'un matelas calorifuge intérieur, les différents panneaux juxtaposés formant une surface continue et étant électriquement réliés entre eux.

L'élément chauffant (2) est constitué d'un matériau en feuille de faible épaisseur dont des deux faces sont en contact intime et continu avec la plaque (1) et le matelas calorifuge (3), et son bord périphérique est en retrait des bords extérieurs des deux autres constituants.

FIG.1

EP 0 055 950 A1

" Plafonds chauffants par rayonnement sous forme modulaire et leur système modulaire de raccordement électrique "

La présente invention concerne un panneau modulaire pour la réalisation de surfaces chauffantes par rayonnement, notamment pour la constitution de plafonds chauffants suspendus, ces panneaux étant constitués par un complexe formé d'un élément chauffant, alimenté en énergie électrique, interposé entre, d'une part, une plaque de revêtement extérieur assurant la dissipation des calories par rayonnement et, d'autre part, un matelas calorifuge intérieur, les différents panneaux juxtaposés formant une surface continue et étant reliés électriquement entre eux.

Les plafonds rayonnants ont connu un certain développement depuis la mise au point de résistances chauffantes plates, sous forme de feuilles chauffantes émettant une température d'environ 40° C répartie sur une grande surface permettant de réaliser le chauffage de locaux publics ou privés dans des conditions d'économie, de confort et de sécurité fort intéressantes.

Leur utilisation a été fortement entravée par des difficultés de mise en oeuvre, laquelle doit faire intervenir divers corps de métiers (plafonniers, staffeurs, chauffagistes, électriciens) et doit être parfaitement exécutée pour obtenir un résultat satisfaisant.

Telle qu'elle est connue actuellement, la mise en oeuvre de plafonds rayonnants comprend les opérations suivantes (succinctement) :

1) - amenée de l'alimentation électrique
2) - pose d'un charpentage
3) - pose agrafée d'une isolation thermique (en bande)
4) - pose agrafée de la feuille chauffante (en bande)
5) - soudure sur place des câbles d'alimentation
6) - isolation électrique des extrémités de feuilles chauffantes
7) - raccordement électrique de l'alimentation de chaque bande chauffante

8) - pose d'un parement, plaqué sous la feuille
chauffante tout en respectant l'intégralité
de celle-ci.

L'invention a pour but de simplifier
considérablement la mise en oeuvre de plafonds chauffants
en prévoyant la réalisation de complexes ou d'ensembles modulaires monoblocs, dont les dimensions soient fonction de la
facilité de manutention (par exemple 60 x 120 cm), qui soient
commodes à poser sans nécessiter l'intervention de plusieurs
corps de métier, tout en permettant d'améliorer grandement
l'efficacité de chauffage du local où ils sont posés.

Ce problème est résolu selon l'invention
grâce au fait que l'élément chauffant est constitué d'un matériau en feuille de faible épaisseur dont les deux faces sont
en contact intime et continu avec la plaque de revêtement et
le matelas calorifuge, le bord périphérique de cet élément
étant en retrait des bords extérieurs des deux autres constituants du complexe qui sont issus de matériaux plans.

En outre, selon l'invention, ces éléments
peuvent être rendus solidairement par collage, soit sur toute
leur surface, soit en pourtour et constituent un ensemble indissociable.

Le fait que les éléments constitutifs des
modules chauffants soient parfaitement au contact les uns des
autres est lui-même un aspect important de l'invention car :
la parfaite liaison feuille chauffante/parement réalise de
façon optimale le chauffage du parement ; la parfaite liaison
feuille chauffante/isolant thermique évite par ailleurs pertes
de chaleur par rayonnement ou convection. Ces conditions permettent d'augmenter le rayonnement des plafonds vers le bas et
sont presque impossibles à réaliser lors de la mise en oeuvre
habituelle (par agrafage) de ces éléments.

Elles permettent également de ne transmettre qu'un minimum de chaleur aux structures porteuses et aux é-
ventuels joints entre panneaux, ceux-ci se trouvant ainsi moins sollicités par les effets des dilatations linéaires.

Cette particularité est explicitée par le rapport entre la résistance thermique du revêtement extérieur, dans le sens de son épaisseur, et la résistance thermique du même revêtement calculée sur la distance entre le bord de la partie active de l'élément chauffant et le bord du revêtement dans le sens horizontal.

Dans une réalisation employant comme revêtement extérieur du plâtre cartonné dont la résistance thermique transversale est :

R = 0,04 on a, par exemple, une résistance thermique latérale

R = 0,24 (6 fois la résistance thermique transversale).

Cet aspect de l'invention permet la répétitivité dans le rendement et la sécurité des plafonds chauffants électriques suspendus ou rapportés en évitant les pertes par convection et les blocages thermiques qui apparaissent lors de la pose des différents éléments en sous-face de plancher ou de toiture en bandes agrafées et qui sont dues à des irrégularités de contact.

Selon une caractéristique de l'invention, le panneau modulaire est doté d'un élément pare-vapeur inséré entre l'élément chauffant et le matelas calorifuge isolant ce dernier de l'action de la vapeur et/ou de l'humidité présente au-dessous du plafond, les dimensions de l'élément pare-vapeur correspondant exactement à celles du matelas calorifuge.

Il est possible de fixer les différents éléments du panneau les uns aux autres, par exemple par collage, mais il s'est également avéré intéressant de ne pas fixer l'élément chauffant au matelas calorifuge et/ou à l'élément pare-vapeur contigu et à la plaque sous-jacente de revêtement afin d'éviter l'inconvénient de l'effet de " bilame " lié au fait que les coefficients de dilatation de l'élément chauffant et de la plaque de revêtement sont différents. Ce problème est résolu grâce au fait que l'élément chauffant est monté librement, sans en être rendu solidaire, entre le matelas calorifuge ou l'élément pare-vapeur et la plaque de revêtement.

Par ailleurs, selon une variante préférée de réalisation de l'invention, l'élément chauffant comporte, latéralement, des bandes conductrices de l'électricité auxquelles sont soudés des conducteurs traversant le matelas calorifuge dans son épaisseur et permettant indifféremment, soit la connexion des panneaux entre eux, soit le raccordement électrique de la surface chauffante avec le réseau.

Selon une variante, les conducteurs sont pourvus de cosses isolées mâles et femelles.

En outre, selon une réalisation préférée de l'invention, l'élément chauffant est muni, sur ses deux faces, de films électriquement isolants respectivement supérieur et inférieur et que les conducteurs comportent une double isolation et sont soudés perpendiculairement aux bandes conductrices et traversent ces dernières, de sorte que, lors du soudage, l'isolant des conducteurs est collé par fusion au film isolant supérieur et il se forme une soudure en forme de rivet sur l'autre face de l'ensemble élément chauffant - bande conductrice.

Enfin, selon une variante avantageuse, les extrêmités des conducteurs sont réunies de façon appariée au moyen de connecteurs autodénudants, non propagateurs d'incendie.

Afin de reconstituer l'isolation électri-que des extrêmités des éléments chauffants, et des points de raccordement des conducteurs, il est prévu, conformément à l'invention, que les coupes de l'élément chauffant sont recou-vertes par "bordage" d'un film adhésif électriquement isolant et que les points de raccordement sont recouverts d'un isolant approprié, par enrobage ou surmoulage.

La liaison des conducteurs aux bandes conductrices de l'élément chauffant est réalisée par soudure, l'âme souple des conducteurs traversant l'élément chauffant, la soudure réalisant alors un "rivetage" augmentant la résistance à l'arrachement des conducteurs. La liaison des conducteurs aux bandes conductrices de l'élément chauffant peut également être réalisée par sertissage, rivetage, etc... directement ou avec un élément intermédiaire.

Bien que les modules soient raccordés les uns aux autres, en lignes, ils sont électriquement alimentés en parallèle, cette disposition permettant de leur fournir à chacun la tension nominale. Cette disposition évite ainsi que chaque module soit raccordé au réseau par un câble d'alimen-tion qui lui serait propre.

L'alimentation des lignes de modules au réseau s'effectue au moyen de deux câbles à double isolation présentant à intervalles réguliers une interruption de la gaine extérieure permettant le positionnement des connecteurs sur lesquels viennent se raccorder les câbles d'alimentation des modules.

Les mêmes connecteurs rapides peuvent ainsi être utilisés indifféremment au raccordement des modules entre eux et à celui des modules aux câbles d'alimentation.

L'invention comprend également des modules ne comportant pas d'élément chauffant permettant l'ajustement des puissances installées et la finition périphérique des plafonds.

Par ailleurs, le parement qui peut être constitué par tout matériau mince utilisé en faux plafonds, est généralement constitué d'une plaque de plâtre armé (staff), soit à bords francs, soit à emboîtement. Ses dimensions (L, 1 ) sont légèrement supérieures à celles de l'isolant thermique, lesquelles sont elles-mêmes légèrement supérieures à celles de la feuille chauffante. Cette disposition permet de suspendre les modules avec les moyens connus (crochets de suspension, "polochon" de plâtre armé) de mise en oeuvre des plaques de staff tout en assurant une protection

- 6 -

0055950

mécanique de la partie chauffante sous tension. Les extrémités des éléments de feuilles chauffantes et les raccordements des fils d'alimentation sont isolés électriquement par les moyens connus.

D'autres caractéristiques et avantages de l'invention ressortiront de la description qui va suivre à titre . d'exemple non limitatif et en regard des dessins annexés, sur lesquels :

- La fig. 1 représente une vue générale très schématique, en élévation latérale, d'un module ou panneau modulaire chauffant selon l'invention ;

- La fig. 2 montre une vue schématique d'un module de raccordement selon l'invention ;

- La fig. 3 illustre le principe de branchement des modules chauffants à l'aide des modules de raccordement conformément à l'invention ;

- La fig. 4 représente une vue schématique en perspective explosée, à plus grande échelle d'une forme préférée de réalisation du panneau modulaire selon l'invention, représenté schématiquement sur la figure 1;

- La fig. 5 montre une coupe transversale prise suivant la ligne II-II de la figure 4 ;

- La fig. 6 montre une coupe longitudinale prise suivant la ligne III-III de la figure 4 ;

- Les fig. 7A, 7B montrent des vues en coupe longitudinale schématique d'un panneau tel que celui de la figure 4, respectivement dans le cas d'une ossature de support cachée et d'une ossature apparente ;

- La fig. 8 montre une vue détaillée à plus grande échelle de la liaison entre un conducteur d'alimentation en courant et une bande conductrice liée à l'élément chauffant du panneau de la figure 4.

Sur la vue en élévation du module chauffant où 1 est le parement, 2 la feuille chauffante, 3 l'isolant thermique, 4 les fils souples d'alimentation des modules, 5 les cosses mâles isolées, 6 les cosses femelles isolées et 7 les bandes conductrices de la feuille chauffante.

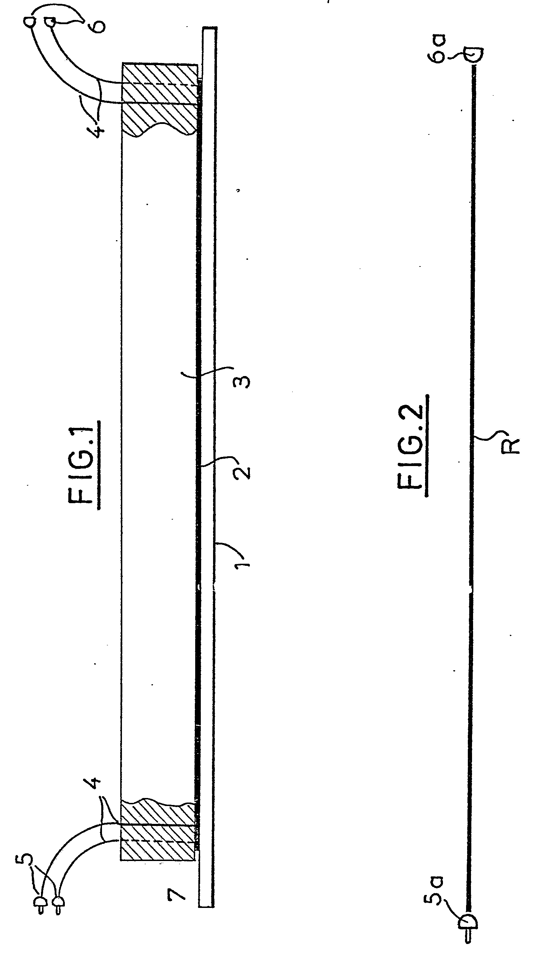

La figure 2 montre un module de raccordement R formé d'un câble isolé comportant une cosse mâle isolée 5a et une cosse double femelle isolée 6a.

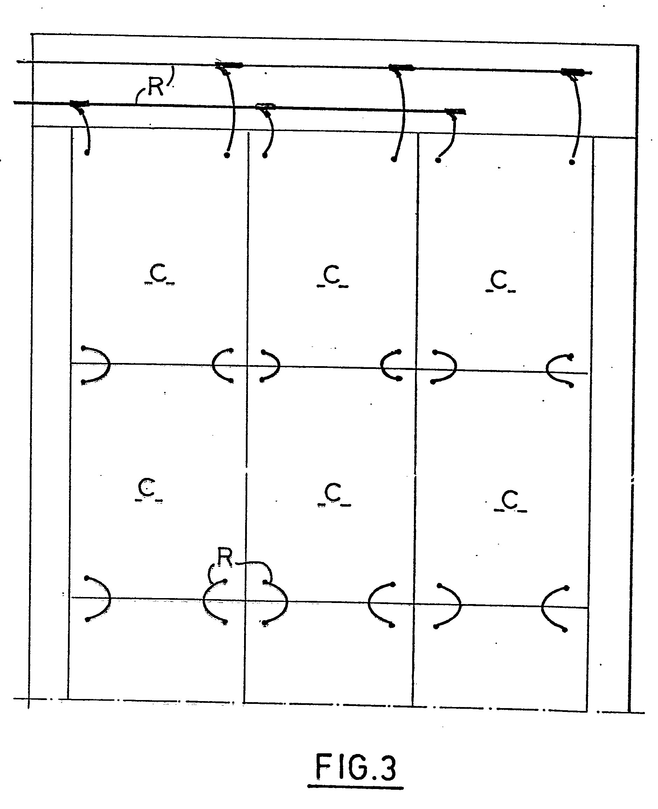

La figure 3 montre le principe de branchement de modules chauffants à l'aide des modules de raccordement R.

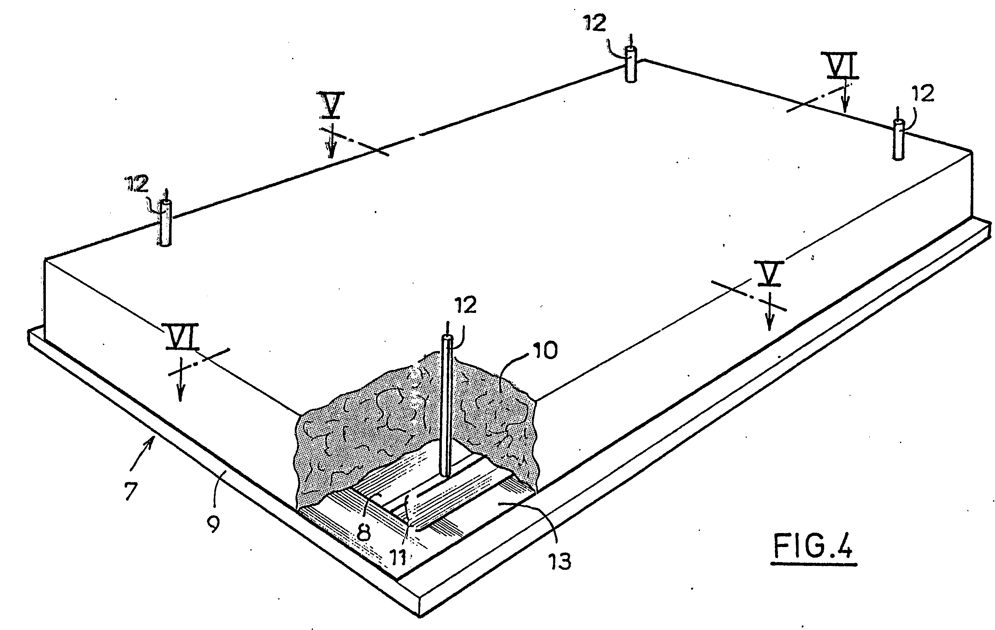

La figure 4 montre de façon schématique la constitution d'un panneau modulaire selon l'invention , désigné par la référence générale 7. Ce panneau 7 comporte un élément chauffant plat 8 disposé entre une plaque de revêtement ou parement 9 et un matelas calorifuge 10, par exemple en laine de verre, tels que décrits dans le brevet principal. L'élément chauffant 8 constitué, par exemple, par une résistance au noir de carbone en forme de bande plate, comporte des bandes conductrices 11 d'alimentation, par exemple en cuivre, auxquelles sont raccordés quatre conducteurs verticaux 12 (dont trois seulement sont visibles sur le dessin). En outre, un élément pare-vapeur sous forme d'une pellicule plate est inséré entre l'élément chauffant 8 et le matelas calorifuge 10 en étant fixé à ce dernier par collage. Selon l'invention, les panneaux sont disposés côte à côte suivant des rangées en lignes, comme indiqué dans le brevet principal.

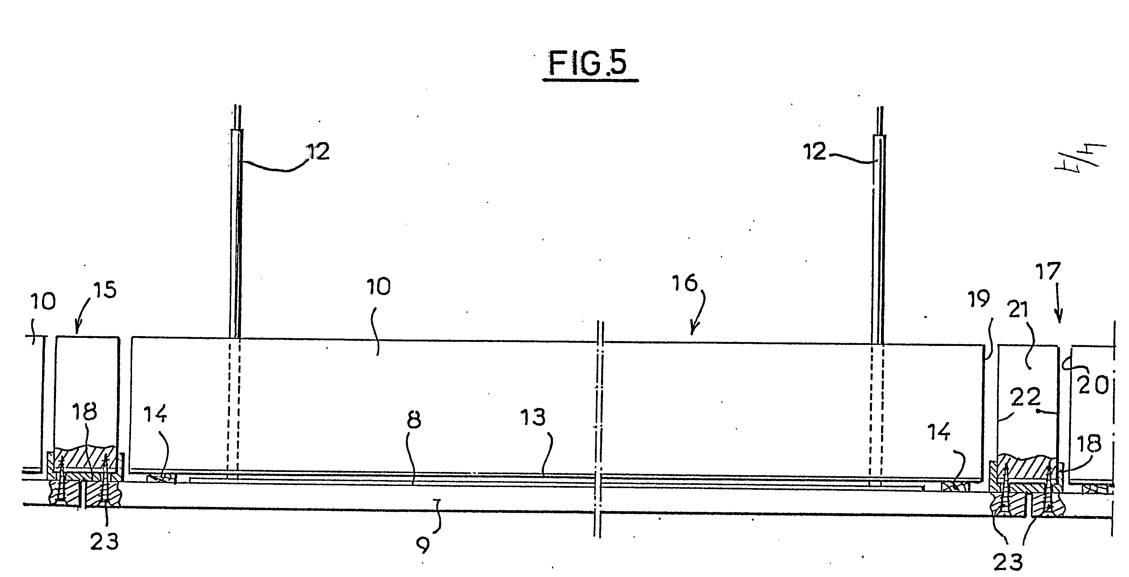

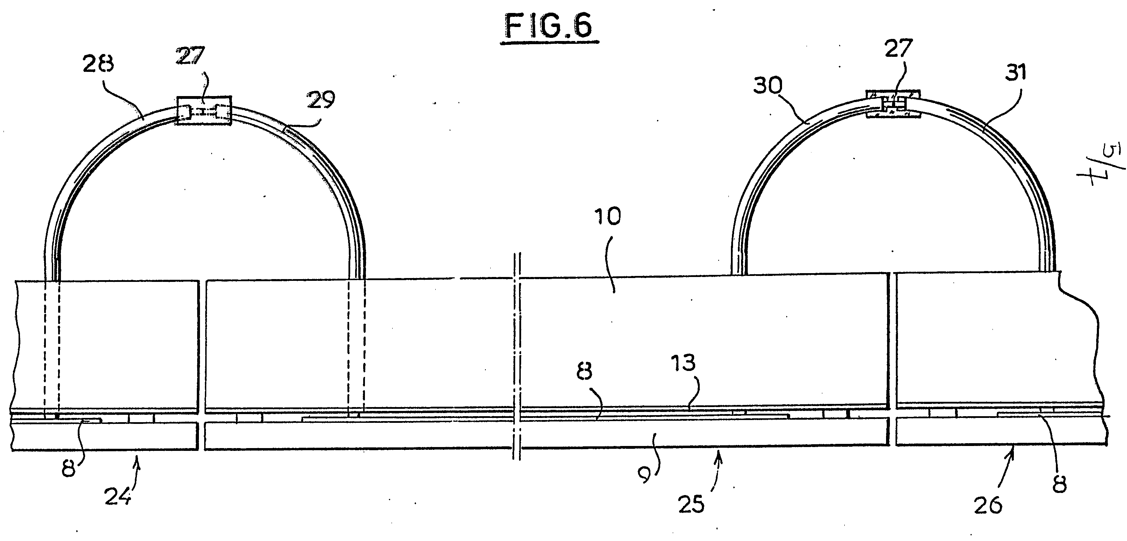

Les différents constituants 8, 9, 10, 13 du panneau 7 peuvent être tous rendus solidaires par exemple par collage, mais, selon une forme de réalisation préférée de l'invention, l'élément chauffant 8 est monté librement, sans en être rendu solidaire, entre l'élément pare-vapeur 13 et la plaque de revêtement 9, en étant seulement traversé par les quatre conducteurs d'alimentation 12. Par ailleurs, comme le montrent les figures 5 et 6, l'ensemble matelas calorifuge 10- élément pare-vapeur 13, dont les dimensions des côtés sont supérieures à celles de l'élément chauffant 8, est rendu solidaire de cette plaque de revêtement par des points de colle 14　(figure 5).

Sur cette figure 5 qui montre une coupe transversale de panneaux du type de celui de la figure 4, on a représenté - éventuellement partiellement - trois panneaux 15, 16, 17 voisins, dont les plaques respectives de revêtement 9 se jouxtent parfaitement en cachant des éléments ou ferrures 18 d'une ossature de suspension des panneaux, qui sont logés entre les bords en vis-à-vis 19, 20 des matelas calorifuges respectifs 10 de panneaux voisins tels que 15, 16 ou 16, 17. Ces éléments 18 en forme de U reçoivent des blocs adaptés 21 de matériau isolant identique à celui constituant les matelas calorifuges 10 et de même hauteur que ceux-ci de manière qu'il ne subsiste que des interstices minimum entre les faces latérales 19, 20 des matelas 10 et les faces latérales voisines 22 du bloc 21, afin de supprimer ou tout au moins de réduire au maximum les ponts thermiques. Des vis 23 assurent la fixation des panneaux 15, 16, 17 aux éléments de suspension 18.

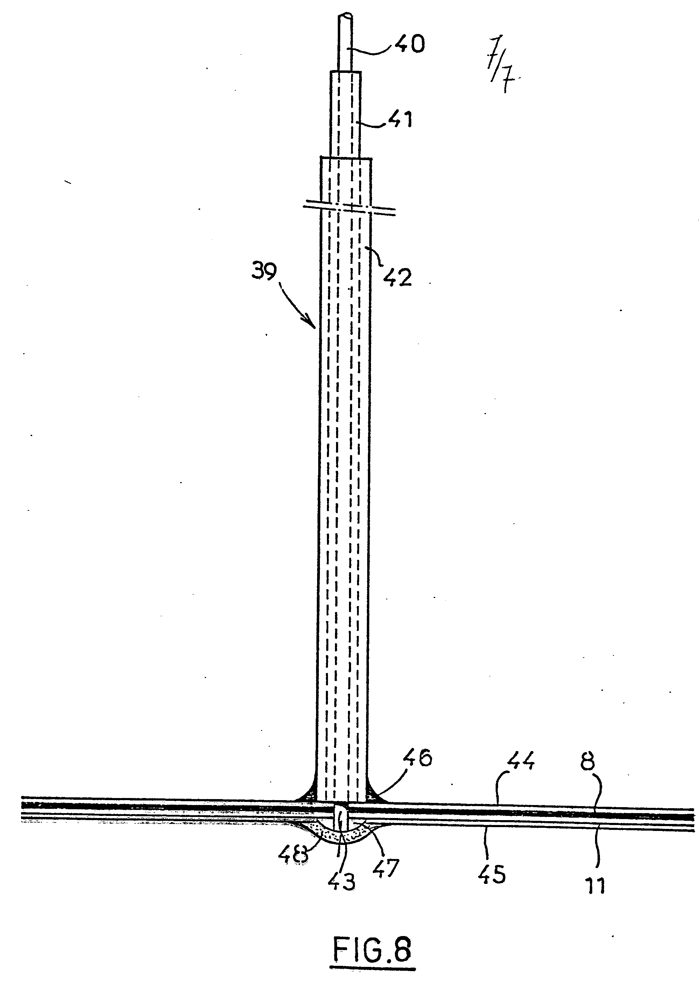

Sur la figure 6, qui montre une coupe longitudinale de panneaux du type de celui de la figure 4, juxtaposés, on a représenté le mode de liaison électrique des éléments chauffants 8 des panneaux 24, 25, 26. Ici, cette liaison est réalisé au moyen de connecteurs autodénudants et non propagateurs d'incendie 27, raccordant électriquement les conducteurs d'alimentation 28, 29, 30, 31, reliés aux bandes conductrices d'alimentation 11 des éléments chauffants 8 (voir figures 4 et 8). On utilise les mêmes connecteurs pour les bran- chement des panneaux modulaires entre eux, pour ceux des lignes de modules aux conducteurs d'alimentation et pour l'isolation des conducteurs des derniers modules de chaque ligne.

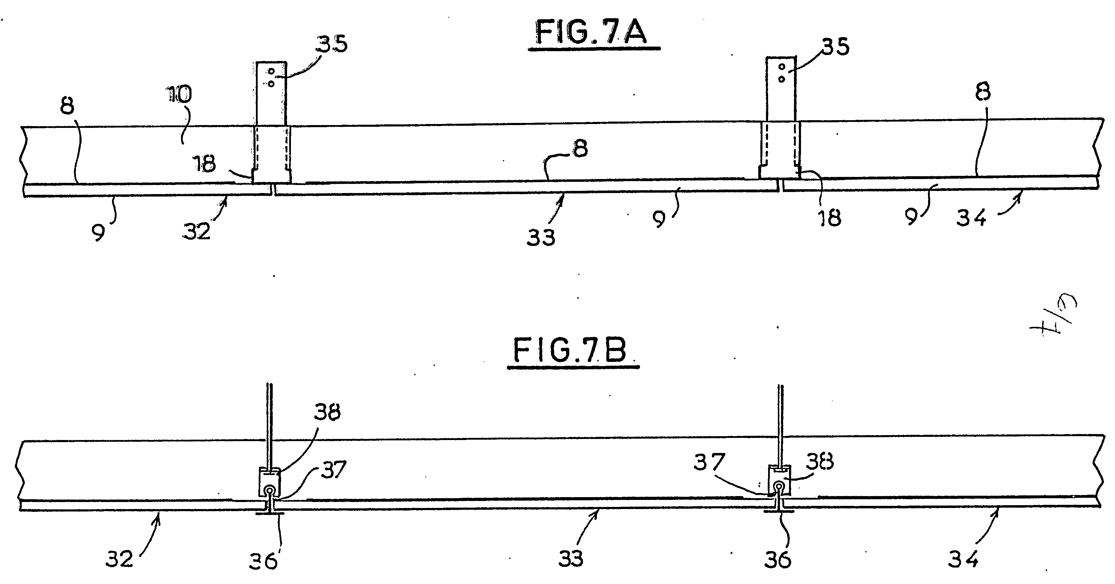

Sur les figures 7A, 7B, on a représenté en coupe longitudinale plusieurs panneaux modulaires voisins 32, 33, 34 tels que le panneau 7 de la figure 4.

Dans le cas de la figure 7A, il s'agit du montage, analogue à celui représenté sur la figure 6, de panneaux supportés par des éléments d'ossature cachés 18, constitués par des fourrures métalliques en U, soutenues au plafond (non représenté) par des suspentes appropriées 35, et auxquels les panneaux 32, 33, 34 sont fixés par des vis, comme indiqué précédemment. Dans ce cas, l'isolation fournie par les matelas calorifuges 10 présente des discontinuités que l'on réduit au maximum comme indiqué en référence à la figure 6, les grands côtés non isolés sur quelques centimètres lors du montage permettant la fixation des panneaux aux éléments 18.

La figure 7B montre des éléments d'ossature apparents 36 supportant les panneaux 32, 33, 34, et eux mêmes soutenus au plafond (non représenté) par des profils porteurs 37 et des organes de suspension 38 représentés schématiquement, tels que des suspentes, des tiges filetées, des écrous, etc... Dans ce cas, il n'y a aucun pont thermique.

On va maintenant expliciter la réalisation de la liaison entre les conducteurs électriques 13 et les bandes conductrices 11 d'alimentation de l'élément chauffant (voir fig. 1). Comme indiqué déjà dans le brevet principal, chaque module ou panneau modulaire est relié électriquement par quatre fils conducteurs 12 qui,traversant l'isolant thermique formé par le matelas calorifuge 10 (voir figures 4 et 6), sont fixés notamment par soudage, au voisinage du bord périphérique de chaque élément chauffant 8, aux bandes 11 conductrices de l'électricité.

A cet effet, conformément à la figure 8, il est prévu selon la présente invention d'utiliser des conducteurs d'alimentation 39 (qui correspondent aux conducteurs 12, 28 à 31) identiques entre eux et comportant une double isolation ; chaque conducteur 39 se compose d'une âme conductrice souple 40 entouré d'une première gaine isolante 41 et d'une seconde gaine isolante extérieure 42. Ces conducteurs sont non propagateurs d'incendie et leur extrémité, non reliée aux bandes conductrices 11, est débarassée de la gaine extérieure 42 pour permettre leur introduction dans les connecteurs tels

- 10 -                                    0055950

que 27 (figure 5).

Par ailleurs, les conducteurs 39 sont soudés perpendiculairement aux bandes 11 d'alimentation de l'élément chauffant 8 et traversent ce dernier en 43. Cette disposition permet, lors de leur fixation par soudage aux bandes, d'obtenir le collage de l'isolant des conducteurs sur la face supérieure de l'élément chauffant. A cet effet, ce dernier comporte, au moins en partie sur ses deux faces au niveau des bandes conductrices 11, un film électriquement isolant supérieur 44 et un film électriquement isolant inférieur 45, Ainsi, l'isolant des conducteurs 33 se "colle" par fusion en 46 au film supérieur 44, lors du raccordement des conducteurs par soudage, en réalisant ainsi une isolation électrique du passage du conducteur à travers l'ensemble 44, 8, 11. En outre, le soudage fournit une résistance mécanique accrue à l'arrachement du conducteur. De plus, on réalise lors du soudage un "rivet" de soudure 47, sur l'autre face inférieure de l'ensemble élément chauffant 8 - bande conductrice 11, ce qui accroît encore la résistance du conducteur à l'arrachement, ledit "rivet" de soudure étant recouvert d'un isolant 48 lié au film isolant inférieur 45.

L'invention, de par sa conception modulaire monobloc associée aux modules de raccordement, apporte à la mise en oeuvre des plafonds chauffants par comparaison avec les méthodes habituelles :

une simplification importante

un gain de temps d'installation

une réduction des coûts d'installation.

En outre, sa conception permet d'obtenir un contact étroit entre ses éléments constitutifs améliorant par là le rendement des plafonds chauffants.

REVENDICATIONS

1°) - Panneau modulaire pour la réalisation de surfaces chauffantes par rayonnement, notamment pour la constitution de plafonds chauffants suspendus, ces panneaux (7; 15, 16,17) étant constitués d'un complexe formé d'un élément chauffant (2; 8), alimenté en énergie électrique, interposé entre, d'une part, une plaque de revêtementextérieur (1;9) assurant le transport des calories par conduction, et, d'autre part, un matelas calorifuge intérieur (3; 10), les différents panneaux juxtaposés (15, 16, 17) formant une surface continue et étant électriquement reliés entre eux, caractérisé en ce que l'élément chauffant (3; 8) est constitué d'un matériau en feuille de faible épaisseur dont les deux faces sont en contact intime et continu avec la plaque de revêtement (1; 9) et le matelas calorifuge (3; 10), le bord périphérique de cet élément étant en retrait des bords extérieurs des deux autres constituants du complexe qui sont issus de matériaux plans.

2°) - Panneau modulaire selon la revendication 1, caractérisé en ce qu'il comporte un élément pare-vapeur (13) constitué en un matériau plat inséré entre l'élément chauffant (8) et le matelas calorifuge (10) et isolant ce dernier de l'action de la vapeur et/ou de l'humidité présentes au-dessous du plafond, les dimensions dudit élément pare-vapeur (13) correspondant exactement à celles du matelas calorifuge (10)

3°) - Panneau modulaire selon l'une quelconque des revendications 1 et 2, caractérisé en ce que la surface de l'élément chauffant en feuille (2; 8) est inférieure à celle du matelas calorifuge (3; 10) laquelle est elle-même inférieure à celle de la plaque de revêtement (1; 9).

4°) - Panneau modulaire selon l'une quelconque des revendications 1 à 3, caractérisé en ce que

- 12 -                                          0055950

la plaque de revêtement (1; 9) comporte un bord extérieur
franc pour son assemblage bord à bord, avec un panneau contigu.

5°) - Panneau modulaire selon l'une
quelconque des revendications 1 à 4, caractérisé en ce que
les trois constituants du complexe (1-2-3 ; 9-8-10) sont
intimement liés les uns aux autres pour former un bloc
unitaire de type modulaire.

6°) - Panneau modulaire selon la revendication 5, caractérisé en ce que les constituants (1-2-3;
9-8-10) du complexe sont rendus solidaires par collage.

7°) - Panneau modulaire selon l'une
quelconque des revendications 1 et 2, caractérisé en ce que
la plaque de revêtement extérieur (1; 9) est constituée de
plâtre armé.

8°) - Panneau modulaire selon l'une
quelconque des revendications 1 à 7, caractérisé en ce que
les bords de l'élément chauffant (2; 8) sont isolés électriquement.

9°) - Panneau modulaire selon l'une
quelconque des revendications 1 et 2, caractérisé en ce que
la plaque de revêtement (1; 9) présente sur son bord extérieur un profil d'emboîtement complémentaire de celui de
la plaque d'un panneau contigu.

10°) - Panneau modulaire selon la revendication 2, caractérisé en ce que l'élément chauffant (2; 8)
est rendu solidaire de l'élément pare-vapeur (13) et de la
plaque de revêtement (3), par exemple par collage.

11°) - Panneau modulaire selon la revendication 2, caractérisé en ce que l'élément chauffant (2)
est monté librement sans en être rendu solidaire, entre le
matelas calorifuge (4) ou l'élément pare-vapeur (7) et la
plaque de revêtement (3) sous jacente.

12°) - Panneau modulaire selon l'une
quelconque des revendications 2,10 et 11, caractérisé en ce

- 13 -

0055950

que l'élément pare-vapeur (7) est fixé, notamment par collage, au matelas calorifuge (4).

13°) - Panneau modulaire selon l'une quelconque des revendications 1 à 12, caractérisé en ce que l'élément chauffant comporte, latéralement, les bandes (7; 11) conductrices de l'électricité auxquelles sont soudés des conducteurs (4; 12) traversant le matelas calorifuge (3; 10) dans son épaisseur et permettant indifféremment, soit la connexion des panneaux entre eux, soit le raccordement électrique de la surface chauffante avec le réseau.

14°) - Panneau modulaire selon la revendication 13, caractérisé en ce que les conducteurs (4) sont pourvus de cosses isolées mâles et femelles (2, 3).

15°) - Panneau modulaire selon l'une quelconque des revendications 13, caractérisé en ce que l'élément chauffant (8) est muni, sur ses deux faces, de films électriquement isolants respectivement supérieur (44) et inférieur (45) et que les conducteurs (12, 28 à 31, 39) comportent une double isolation (41, 42) et sont soudés perpendiculairement aux bandes conductrices (11) et traversent ces dernières, de sorte que, lors du soudage, l'isolant (42) des conducteurs est collé (en 46) par fusion au film isolant supérieur (44) et il se forme une soudure en forme de rivet (47) sur l'autre face de l'ensemble élément chauffant (8) - bande conductrice (11)

16°) - Panneau modulaire selon l'une quelconque des revendications 13 à 15, caractérisé en ce que le rivet de soudure (47) est recouvert d'un isolant (48) lié au film isolant inférieur (45) de l'ensemble élément chauffant (8) - bande conductrice (11).

17°) - Panneau modulaire selon l'une quelconque des revendications 15 et 16, caractérisé en ce que les extrêmités des conducteurs (12, 28 à 31, 39) sont réunies de façon appariée au moyen de connecteurs autodénudants (27), non propagateurs d'incendie.

18°) - Panneau modulaire selon l'une quelconque des revendications 1 à 17 , caractérisé en ce que dans le cas de la pose de tels panneaux modulaires (7; 15, 16, 17) avec une ossature de suspension apparente (36), le matelas calorifuge (10), par exemple en laine de verre , recouvre toute la surface du panneau (7; 15, 16, 17) sans aucune discontinuité.

19°) - Panneau modulaire selon l'une quelconque des revendications 1 à 17, caractérisé en ce que dans le cas de la pose de tels panneaux modulaires (7; 15, 16, 17) par fixation à l'aide de vis (23) sous armature cachée, le matelas calorifuge (10) présente de faibles discontinuités au droit des bords latéraux des éléments d'armature (18), qui portent eux-mêmes des éléments (21) de matelas calorifuge jouxtant de très près les côtés (19, 20) des matelas calorifuges (10) des panneaux voisins (15, 16, 17), de manière à réduire au maximum ou supprimer toute discontinuité d'isolation thermique.

20°) - Panneaux modulaires selon l'une quelconque des revendications 1 à 19, caractérisé en ce que l'élément chauffant (2; 8) est formé d'une résistance au noir de carbone, en forme de film, alimentée en parallèle par des bandes minces de cuivre situées latéralement de part et d'autre de la résistance.

# FIG.1

# FIG.2

1/7

0055950

**FIG.3**

3/7

FIG.4

FIG.5

0055950

4/7

# FIG.6

## FIG.7A

35

35

8

10

8

8

18

18

9

32

33

9

9

34

## FIG.7B

38

37

38

37

32

36

33

36

34

0055950

7/7

FIG.8

**Office européen des brevets**

# RAPPORT DE RECHERCHE EUROPEENNE

Numéro de la demande

EP 81 40 1911

| DOCUMENTS CONSIDERES COMME PERTINENTS | | | CLASSEMENT DE LA DEMANDE (Int. Cl. 3) |
|---|---|---|---|
| Catégorie | Citation du document avec indication, en cas de besoin, des parties pertinentes | Revendication concernée | |
| A | <u>FR - A - 2 104 560</u> (KNAUF)<br>* Revendications 1-3; figures *<br><br>-- | 1,2,14 | F 24 D 13/02 |
| X | <u>FR - A - 2 169 892</u> (LAUR, KNUDSEN)<br>* Page 3, lignes 1-9 *<br><br>-- | 1,3,5,<br>10 | |
| A | <u>US - A - 3 603 764</u> (MARTIN)<br>* Abrégé; figures 1,2 *<br><br>-- | 1,3,4,<br>5 | |
| A | <u>DE - A - 2 821 530</u> (DEUTSCH-KANA-<br>DISCHE GRUNDSTUCKSGESELLSCHAFT)<br>* Page 7, dernière paragraphe -<br>page 8, première paragraphe;<br>figures 1,2 *<br><br>-- | 1,2,5,<br>8,10 | **DOMAINES TECHNIQUES RECHERCHES (Int. Cl. 3)**<br><br>F 24 D |
| A | <u>GB - A - 1 274 669</u> (SYMONS & CO)<br>* Page 2, lignes 18-40; figures *<br><br>-- | 20 | |
| A | <u>US - A - 2 540 295</u> (SCHREIBER)<br>* Colonne 4, lignes 25-66; figu-<br>res *<br><br>-- | 20 | **CATEGORIE DES DOCUMENTS CITES**<br><br>X: particulièrement pertinent à lui seul<br>Y: particulièrement pertinent en combinaison avec un autre document de la même catégorie<br>A: arrière-plan technologique<br>O: divulgation non-écrite<br>P: document intercalaire<br>T: théorie ou principe à la base de l'invention<br>E: document de brevet antérieur, mais publié à la date de dépôt ou après cette date<br>D: cité dans la demande<br>L: cité pour d'autres raisons |
| A | <u>FR - A - 2 083 798</u> (ELECTRICITE<br>NEUCHATELOISE)<br>* Figures 2,3 *<br><br>-- | 18,19 | |
| | | | &: membre de la même famille, document correspondant |

Le présent rapport de recherche a été établi pour toutes les revendications

| Lieu de la recherche | Date d'achèvement de la recherche | Examinateur |
|---|---|---|
| La Haye | 22-03-1982 | VAN GESTEL |

OEB Form 1503.1 06.78